# EUROPEAN PATENT APPLICATION

(11) **EP 4 789 936 A1**
(43) Date of publication of application: **12.08.2026**
(21) Application number: 25156905.9
(22) Date of filing: 10.02.2025
(51) Int. Cl.: B60W 10/06, B60W 10/119, B60W 30/18, B60W 50/00

(54) **CONDITIONAL WHEEL DECOUPLING DURING SAILING PERIOD**

(71) Applicant: Volvo Truck Corporation, 405 08 Göteborg (SE)
(72) Inventor: PETTERSSON, Emil, 449 43 NOL (SE); LARSSON, Lena, 426 74 VÄSTRA FRÖLUNDA (SE)
(74) Representative: Kransell & Wennborg KB

(57) **Abstract**

A computer system (31) comprising processing circuitry (33) configured to: receive an indication (35) of a predicted duration of a sailing period during which a vehicle (1) can carry out a mission without driving at least a first wheel (13a-b) and a second wheel (17a-b) of the vehicle (3) using a prime mover (7) of the vehicle (3); and provide, in response to the predicted duration of the sailing period being longer than a predefined threshold duration, a command (37) to disconnect, during at least a portion of the sailing period, the first wheel (13a-b) and the second wheel (17a-b) from each other, allowing the first wheel (13a-b) and the second wheel (17a-b) to rotate independently of each other.

## Description

### TECHNICAL FIELD

The disclosure relates generally to vehicle control. In particular aspects, the disclosure relates to conditional wheel decoupling during a sailing period for a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

To save energy, a vehicle may be controlled to a sailing state, in which a prime mover of the vehicle does not drive any wheels of the vehicle.

It would be desirable to control the vehicle to provide for additional savings in energy.

### SUMMARY

According to a first aspect of the disclosure, there is provided a computer system comprising processing circuitry configured to: receive an indication of a predicted duration of a sailing period during which a vehicle can carry out a mission without driving at least a first wheel and a second wheel of the vehicle using a prime mover of the vehicle; and provide, in response to the predicted duration of the sailing period being longer than a predefined threshold duration, a command to disconnect, during at least a portion of the sailing period, the first wheel and the second wheel from each other, allowing the first wheel and the second wheel to rotate independently of each other. The first aspect of the disclosure may seek to provide for additional energy savings for a vehicle. Especially during adverse road surface conditions, a heavy vehicle may be driven with two or more driving wheels connected together, by one or more couplings and/or differential locks. A technical benefit may include that energy losses resulting from slip - turning and/or wheels with different diameter can be reduced/eliminated during the sailing period. The present inventors have realized that the duration of the sailing period can be accurately predicted using topography information. They have also realized that this only results in net energy savings if the sailing period is sufficiently long for the energy savings from disconnecting outweigh the energy cost of operating the appropriate actuators for disconnecting and re-connecting the wheels. The threshold duration may, for example, depend on various operating parameters of the vehicle to provide for that the energy savings from disconnecting the wheels outweigh the energy cost of actuating the disconnection and reconnection. Factors influencing the threshold duration may include the wheel configuration, such as the number of driven axles and the presence of lift axles, the properties of the wheels, including differences in diameter due to wear or tire pressure variations, and a road friction estimate, which may impact rolling resistance and traction requirements. By considering one or more of these factors, the system can dynamically adjust the threshold duration to maximize energy efficiency under different driving conditions. Heavy-duty vehicles may, for example, carry out missions such as long-haul freight transport, where goods are transported over long distances between cities or countries, primarily on highways, and regional delivery, which involves distributing products within a specific area, typically requiring multiple stops and varied routes.

Optionally, in some examples, including in at least one preferred example, the processing circuitry may be configured to receive an indication of an end of the sailing period and, in response, provide a command to reconnect the first wheel and the second wheel to each other, forcing them to rotate together. This configuration may provide the technical benefit of ensuring a seamless transition back to a driving state without unnecessary delays. In particular, this may improve vehicle stability and control by re-establishing synchronized wheel rotation at the appropriate time, reducing drivetrain stress and optimizing energy efficiency when propulsion resumes.

Optionally, in some examples, including in at least one preferred example, the first wheel may be drivable by a first drive axle of the vehicle, and the second wheel may be drivable by a second drive axle of the vehicle. This configuration may provide the technical benefit of reducing energy losses in scenarios where differences in wheel rotation would otherwise cause slip. In particular, significant energy savings may be achieved when the vehicle includes a lift axle, where differences in wheel diameter due to wear or tire pressure variations can create resistance, or in front-wheel-drive configurations, where the front wheels are intentionally driven at a higher speed to facilitate turning. By disconnecting the wheels between separate drive axles during a sailing period, unnecessary slip losses can be avoided, improving overall energy efficiency.

Optionally, in some examples, including in at least one preferred example, the processing circuitry may be configured to provide a command to disconnect a transmission of the vehicle from the prime mover during at least a portion of the sailing period. This configuration may provide the technical benefit of reducing internal drivetrain losses by preventing unnecessary drag from the disengaged prime mover. In particular, disconnecting the transmission allows the wheels to rotate more freely, minimizing mechanical resistance and enabling a more efficient sailing mode, which can lead to further energy savings. It would also be possible to disconnect the transmission of the vehicle from the drive axles of the vehicle, which may result in additional energy savings, since the transmission may then need to rotate together with the driving wheels. This may be particularly useful for vehicles where the prime mover is electric.

Optionally, in some examples, including in at least one preferred example, the processing circuitry may be configured to provide a command to deactivate the prime mover of the vehicle during at least a portion of the sailing period. This configuration may provide the technical benefit of eliminating energy consumption by the prime mover when propulsion is not needed. In particular, deactivating the prime mover during an extended sailing period can reduce fuel or energy usage, lower emissions in the case of an internal combustion engine, and extend the operational range of the vehicle.

Optionally, in some examples, including in at least one preferred example, the processing circuitry may be further configured to estimate, while the first wheel and the second wheel are disconnected from each other during at least a portion of the sailing period, a difference between the angular speed of the first wheel and the angular speed of the second wheel. This configuration may provide the technical benefit of monitoring rotational differences between the wheels to assess potential slip or mismatches in wheel diameter. In particular, estimating the angular speed difference allows the system to detect conditions such as uneven tire wear or pressure differences, which may affect vehicle efficiency and handling.

Optionally, in some examples, including in at least one preferred example, the processing circuitry may be further configured to provide, in response to the difference between the angular speed of the first wheel and the angular speed of the second wheel being estimated to be smaller than a predefined first difference, a command to reconnect the first wheel and the second wheel to each other, forcing them to rotate together after the sailing period. This configuration may provide the technical benefit of ensuring that the wheels are only reconnected when their rotational speeds are sufficiently similar, preventing excessive drivetrain stress and improving the smoothness of the re-engagement. In particular, this may help protect mechanical components, reduce wear on the coupling mechanism, and allow for an energy-efficient transition back to a driven state. If the difference between the angular speed of the first wheel and the second wheel is above a predefined second difference, reconnection can be prevented to avoid excessive drivetrain stress. Alternatively, reconnection may be limited to occur only when the power or torque transferred through the coupling is below a predefined value, ensuring a smoother and more controlled transition while protecting mechanical components from excessive load.

Optionally, in some examples, including in at least one preferred example, the processing circuitry may be configured to receive an indication of a predicted duration of a sailing period during which a vehicle can carry out a mission without driving at least a first wheel and a second wheel using a prime mover of the vehicle; provide a command to disconnect the prime mover from a transmission of the vehicle; provide a command to deactivate the prime mover; provide, conditional upon the predicted duration of the sailing period being longer than a predefined threshold duration, a command to disconnect, during at least a portion of the sailing period, the first wheel and the second wheel from each other, allowing them to rotate independently; provide a command to reactivate the prime mover and reconnect the prime mover to the transmission; and provide, conditional upon the predicted duration of the sailing period being longer than the predefined threshold duration, a command to reconnect the first wheel and the second wheel to each other, forcing them to rotate together. This configuration may provide the technical benefit of automating the entire process of energy-efficient sailing, ensuring that each disconnection and reconnection event is optimally timed based on predicted driving conditions. In particular, by coordinating the deactivation of the prime mover, drivetrain disconnection, and wheel decoupling, the system can maximize energy savings while maintaining seamless vehicle operation.

Optionally, in some examples, including in at least one preferred example, the computer system may be comprised in a vehicle.

Optionally, in some examples, including in at least one preferred example, the vehicle may further comprise a prime mover, a first wheel, a second wheel, and a coupling between the first wheel and the second wheel. The coupling may be controllable by the processing circuitry of the computer system between an engaged state, in which the first wheel and the second wheel are forced to rotate with a fixed angular speed difference, and a disengaged state, in which the first wheel and the second wheel are allowed to rotate independently of each other. Driving wheels can be connected to each other through various types of couplings, including differential locks and mechanical clutches. In heavy vehicles, differential locks are typically implemented as dog clutches, which engage or disengage to lock or allow relative motion between wheels on the same axle or across multiple axles. Alternatively, a multi-plate clutch or an electronically controlled coupling may be used to modulate the connection between wheels. Disconnection can be achieved by disengaging the differential lock or declutching the coupling, allowing the wheels to rotate independently. Reconnection is typically performed by re-engaging the differential lock or clutch, forcing the wheels to rotate together.

According to a second aspect of the disclosure, there is provided a computer-implemented method comprising receiving an indication of a predicted duration of a sailing period during which a vehicle can carry out a mission without driving at least a first wheel and a second wheel of the vehicle using a prime mover of the vehicle; and providing, in response to the predicted duration of the sailing period being longer than a predefined threshold duration, a command to disconnect, during at least a portion of the sailing period, the first wheel and the second wheel from each other, allowing the first wheel and the second wheel to rotate independently of each other. The second aspect of the disclosure may seek to provide for additional energy savings for a vehicle. Especially during adverse road surface conditions, a heavy vehicle may be driven with two or more driving wheels connected together, by one or more couplings and/or differential locks. A technical benefit may include that energy losses resulting from slip, turning and/or wheels with different diameters can be reduced or eliminated during the sailing period. The present inventors have realized that the duration of the sailing period can be accurately predicted using topography information. They have also realized that this only results in net energy savings if the sailing period is sufficiently long for the energy savings from disconnecting outweigh the energy cost of operating the appropriate actuators for disconnecting and reconnecting the wheels. The threshold duration may, for example, depend on various operating parameters of the vehicle to provide for that the energy savings from disconnecting the wheels outweigh the energy cost of actuating the disconnection and reconnection. Factors influencing the threshold duration may include the wheel configuration, such as the number of driven axles and the presence of lift axles, the properties of the wheels, including differences in diameter due to wear or tire pressure variations, and a road friction estimate, which may impact rolling resistance and traction requirements. By considering one or more of these factors, the method can dynamically adjust the threshold duration to maximize energy efficiency under different driving conditions. Heavy-duty vehicles may, for example, carry out missions such as long-haul freight transport, where goods are transported over long distances between cities or countries, primarily on highways, and regional delivery, which involves distributing products within a specific area, typically requiring multiple stops and varied routes.

Optionally, in some examples, including in at least one preferred example, the method may further comprise receiving an indication of an end of the sailing period and, in response, providing a command to reconnect the first wheel and the second wheel to each other, forcing them to rotate together. This may provide the technical benefit of ensuring a seamless transition back to a driving state without unnecessary delays. In particular, this may improve vehicle stability and control by re-establishing synchronized wheel rotation at the appropriate time, reducing drivetrain stress and optimizing energy efficiency when propulsion resumes.

Optionally, in some examples, including in at least one preferred example, the method may further comprise determining that the first wheel is drivable by a first drive axle of the vehicle and the second wheel is drivable by a second drive axle of the vehicle. This may provide the technical benefit of reducing energy losses in scenarios where differences in wheel rotation would otherwise cause slip. In particular, significant energy savings may be achieved when the vehicle includes a lift axle, where differences in wheel diameter due to wear or tire pressure variations can create resistance, or in front-wheel-drive configurations, where the front wheels are intentionally driven at a higher speed to facilitate turning. By disconnecting the wheels between separate drive axles during a sailing period, unnecessary slip losses can be avoided, improving overall energy efficiency.

Optionally, in some examples, including in at least one preferred example, the method may further comprise providing a command to disconnect a transmission of the vehicle from the prime mover during at least a portion of the sailing period. This may provide the technical benefit of reducing internal drivetrain losses by preventing unnecessary drag from the disengaged prime mover. In particular, disconnecting the transmission allows the wheels to rotate more freely, minimizing mechanical resistance and enabling a more efficient sailing mode, which can lead to further energy savings.

Optionally, in some examples, including in at least one preferred example, the method may further comprise providing a command to deactivate the prime mover of the vehicle during at least a portion of the sailing period. This may provide the technical benefit of eliminating energy consumption by the prime mover when propulsion is not needed. In particular, deactivating the prime mover during an extended sailing period can reduce fuel or energy usage, lower emissions in the case of an internal combustion engine, and extend the operational range of the vehicle.

Optionally, in some examples, including in at least one preferred example, the method may further comprise estimating, while the first wheel and the second wheel are disconnected from each other during at least a portion of the sailing period, a difference between the angular speed of the first wheel and the angular speed of the second wheel. This may provide the technical benefit of monitoring rotational differences between the wheels to assess potential slip or mismatches in wheel diameter. In particular, estimating the angular speed difference allows the method to detect conditions such as uneven tire wear or pressure differences, which may affect vehicle efficiency and handling.

Optionally, in some examples, including in at least one preferred example, the method may further comprise providing, in response to the difference between the angular speed of the first wheel and the angular speed of the second wheel being estimated to be smaller than a predefined first difference, a command to reconnect the first wheel and the second wheel to each other, forcing them to rotate together after the sailing period. This may provide the technical benefit of ensuring that the wheels are only reconnected when their rotational speeds are sufficiently similar, preventing excessive drivetrain stress and improving the smoothness of the re-engagement. In particular, this may help protect mechanical components, reduce wear on the coupling mechanism, and allow for an energy-efficient transition back to a driven state. If the difference between the angular speed of the first wheel and the second wheel is above a predefined second difference, reconnection can be prevented to avoid excessive drivetrain stress. Alternatively, reconnection may be limited to occur only when the power or torque transferred through the coupling is below a predefined value, ensuring a smoother and more controlled transition while protecting mechanical components from excessive load.

Optionally, in some examples, including in at least one preferred example, the method may further comprise receiving an indication of a predicted duration of a sailing period during which a vehicle can carry out a mission without driving at least a first wheel and a second wheel using a prime mover of the vehicle; providing a command to disconnect the prime mover from a transmission of the vehicle; providing a command to deactivate the prime mover; providing, conditional upon the predicted duration of the sailing period being longer than a predefined threshold duration, a command to disconnect, during at least a portion of the sailing period, the first wheel and the second wheel from each other, allowing them to rotate independently; providing a command to reactivate the prime mover and reconnect the prime mover to the transmission; and providing, conditional upon the predicted duration of the sailing period being longer than the predefined threshold duration, a command to reconnect the first wheel and the second wheel to each other, forcing them to rotate together. This may provide the technical benefit of automating the entire process of energy-efficient sailing, ensuring that each disconnection and reconnection event is optimally timed based on predicted driving conditions. In particular, by coordinating the deactivation of the prime mover, drivetrain disconnection, and wheel decoupling, the method can maximize energy savings while maintaining seamless vehicle operation.

According to a third aspect of the disclosure, there is provided a computer program product comprising program code for performing, when executed by the processing circuitry comprised in the computer system of the first aspect, the method of the second aspect of the disclosure.

According to a fourth aspect of the disclosure, there is provided a non-transitory computer-readable storage medium comprising instructions, which when executed by the processing circuitry comprised in the computer system of the first aspect, cause the processing circuitry to perform the method of the second aspect of the disclosure.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer system (3 1)s, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG.** 1 is an exemplary vehicle combination according to an example.
**FIG.** 2 is a functional illustration of an exemplary vehicle.
**FIG.** 3 is an exemplary computer system according to an example.
**FIG.** 4 is an exemplary method according to an example.
**FIG.** 5 is an exemplary method according to an example.
**FIG.** 6 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

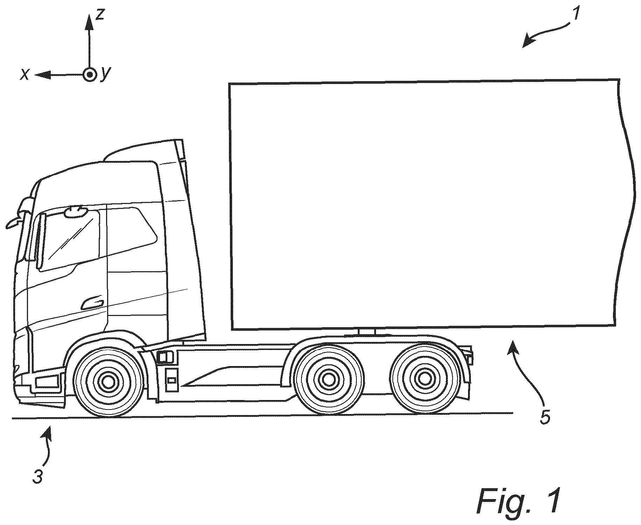

FIG. 1 is an exemplary vehicle combination 1 according to an example. Referring to Fig. 1, the exemplary vehicle combination 1 comprises a first vehicle 3 and a second vehicle 5 coupled to the first vehicle 3.

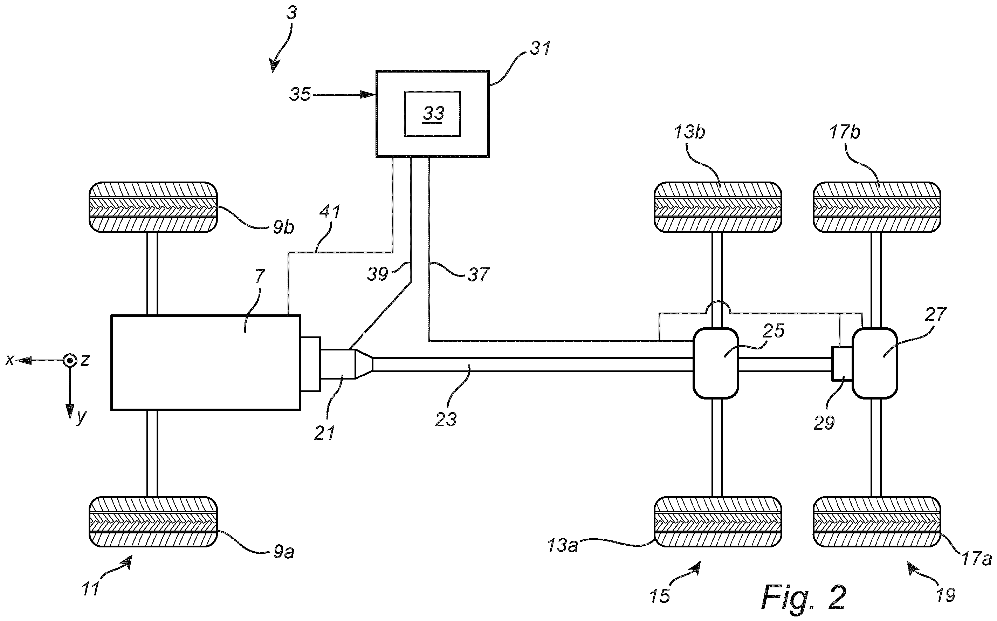

FIG. 2 illustrates a functional example of a vehicle 3. Referring to FIG. 2, the vehicle 3 comprises a prime mover 7, a left side wheel 9a and a right side wheel 9b on an undriven axle 11, a first drive axle 15 with a left side wheel 13a and a right side wheel 13b, and a first propeller shaft 23 providing torque from the prime mover 7 to the first drive axle 15. The first drive axle 15 comprises a first differential 25, which is controllable to distribute torque between the left side wheel 13a and the right side wheel 13b. The vehicle 3 further comprises a second drive axle 19, which may be a lift axle, and a second differential 27 configured to distribute torque between a left side wheel 17a and a right side wheel 17b on the second drive axle 19.To allow torque transfer between the first drive axle 15 and the second drive axle 19, the vehicle 3 further comprises an inter-axle coupling 29. The inter-axle coupling 29, the first differential 25, and the second differential 27 may each be controllable between an engaged state, in which the connected wheels are forced to rotate with a fixed angular speed difference, and a disengaged state, in which the connected wheels are allowed to rotate independently of each other. The vehicle 3 further comprises a computer system 31 comprising processing circuitry 33, which is configured to control the engagement and disengagement of the inter-axle coupling 29, the first differential 25, and the second differential 27, using a coupling command 37, based on an indication 35 of a predicted duration of a sailing period. Optionally, the processing circuitry may additionally be configured to control operation of one or more of the transmission 21 of the vehicle 3, using transmission command 39, and the prime mover 7 of the vehicle 3, using prime mover command 41.

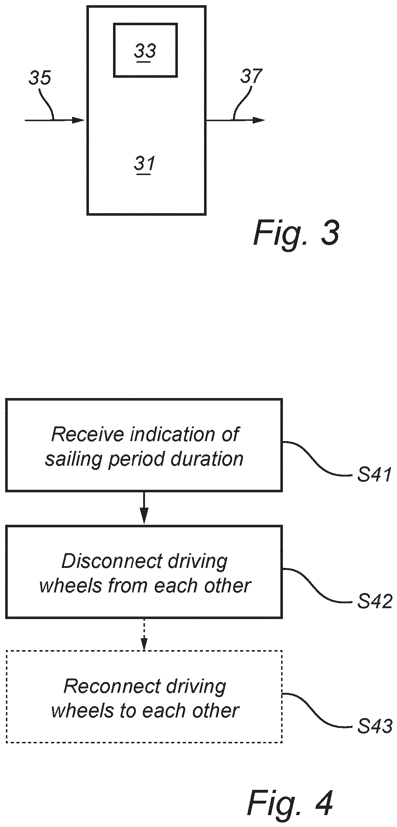

FIG. 3 illustrates an exemplary computer system 31 according to an example. The computer system 31 comprises processing circuitry 33 configured to receive an indication 35 of a predicted duration of a sailing period during which a vehicle 1 can carry out a mission without driving at least a first wheel 13a-b and a second wheel 17a-b of the vehicle 3 using a prime mover 7 of the vehicle 3. The processing circuitry 33 is further configured to provide, in response to the predicted duration of the sailing period being longer than a predefined threshold duration, a command 37 to disconnect, during at least a portion of the sailing period, the first wheel 13a-b and the second wheel 17a-b from each other, allowing the first wheel 13a-b and the second wheel 17a-b to rotate independently of each other.

Different wheels of the vehicle 3 may be disconnected from each other by controlling the inter-axle coupling 29, the first differential 25, and the second differential 27. The computer system 31, using processing circuitry 33, may engage or disengage these components based on an indication 35 of a predicted duration of a sailing period. When disengaged, the first differential 25 may allow the left side wheel 13a and the right side wheel 13b on the first drive axle 15 to rotate independently, while the second differential 27 may enable independent rotation of the left side wheel 17a and the right side wheel 17b on the second drive axle 19. Additionally, the inter-axle coupling 29 may be disengaged to decouple the first drive axle 15 from the second drive axle 19, further reducing drivetrain resistance. These operations may be executed through a coupling command 37, and optionally, the processing circuitry 33 may also control the transmission 21 via a transmission command 39 and the prime mover 7 via a prime mover command 41.

According to an example, the processing circuitry 33 of the computer system 31 may be configured to receive an indication 35 of a predicted duration of a sailing period during which a vehicle 3 can carry out a mission without driving at least the first wheel 13a-b and the second wheel 17a-b of the vehicle 3 using the prime mover 7 of the vehicle 3. Based on this indication, the processing circuitry 33 may provide a command 39 to disconnect the prime mover 7 from the transmission 21 of the vehicle 3, effectively decoupling the powertrain. The system may also provide a command 41 to deactivate the prime mover 7 during the sailing period. If the predicted duration of the sailing period exceeds a predefined threshold duration, the processing circuitry 33 may further issue a command 37 to disconnect, during at least a portion of the sailing period, the first wheel 13a-b and the second wheel 17a-b from each other, allowing them to rotate independently. This may involve disengaging the first differential 25 and second differential 27 to allow the left side wheels 13a, 17a and the right side wheels 13b, 17b on each drive axle 15, 19 to rotate independently from each other, as well as disengaging the inter-axle coupling 29 to decouple the drive axles 15, 19 from each other, reducing drivetrain resistance. When the sailing period concludes, the system may provide a command to reactivate the prime mover 7, reconnect it to the transmission 21, and, if necessary, provide a command to reconnect the first and second wheels 13a-b and 17a-b, forcing them to rotate together. This coordinated control of the transmission 21, prime mover 7, and drive wheel couplings 25, 27, 29 helps to optimize energy efficiency during the sailing period.

FIG. 4 illustrates an exemplary method according to an example. The method comprises receiving S41 an indication 35 of a predicted duration of a sailing period during which a vehicle 3 can carry out a mission without driving at least the first wheel 13a-b and the second wheel 17a-b of the vehicle 3 using a prime mover 7 of the vehicle 3. In response to the predicted duration of the sailing period being longer than a predefined threshold duration, the method further comprises providing S42 a command to disconnect, during at least a portion of the sailing period, the first wheel 13a-b and the second wheel 17a-b from each other, allowing the first wheel 13a-b and the second wheel 17a-b to rotate independently of each other. As is schematically indicated in FIG. 4, the method may further optionally comprise receiving S43 an indication of an end of the sailing period and, in response to the indication of the end of the sailing period, providing S44 a command to reconnect the first wheel 13a-b and the second wheel 17a-b to each other, forcing the first wheel 13a-b and the second wheel 17a-b to rotate together. Disconnecting and reconnecting wheels may be achieved by controlling the first differential 25, the second differential 27, and the inter-axle coupling 29, allowing the left side wheels 13a, 17a and the right side wheels 13b, 17b on each drive axle 15, 19 to rotate independently and decoupling the drive axles 15, 19 from each other. Reconnection may be performed by re-engaging these components to force the wheels to rotate together. Additionally, the prime mover 7 and the transmission 21 may be involved in the process, with the prime mover 7 being deactivated and disconnected from the transmission 21 during the sailing period and subsequently reactivated and reconnected when propulsion is required.

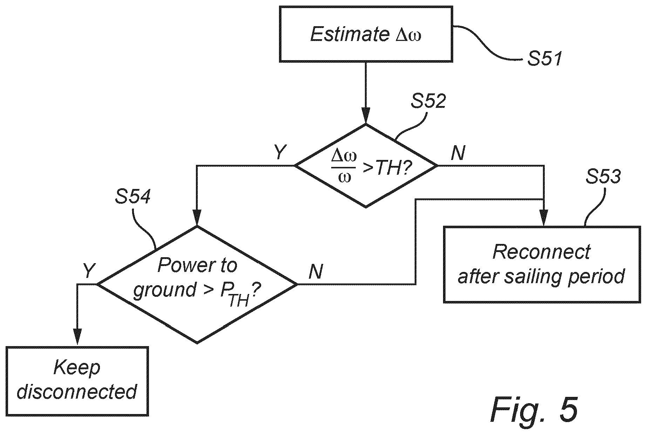

FIG. 5 illustrates an exemplary method according to an example. The method follows after S42 described above with reference to FIG. 4. It comprises estimating S51, while the first wheel 13a-b and the second wheel 17a-b are disconnected from each other during at least a portion of the sailing period, a difference Δω between the angular speed of the first wheel 13a-b and the angular speed of the second wheel 17a-b. The method then proceeds to determining S52 whether a ratio between the difference Δω and the angular speed is greater than a predefined threshold ratio. If the ratio is not greater than the predefined threshold, the method proceeds to providing S53 a command to reconnect the first wheel 13a-b and the second wheel 17a-b to each other, forcing them to rotate together after the sailing period. If the ratio is greater than the predefined threshold, the method proceeds to determining S54 whether the power or torque transferred to the ground is greater than a predefined threshold value. If the power or torque is greater than the predefined threshold, the method proceeds to maintaining S55 the first wheel 13a-b and the second wheel 17a-b in the disconnected state. Otherwise, the method proceeds to S53, providing a command to reconnect the first wheel 13a-b and the second wheel 17a-b to each other, forcing them to rotate together after the sailing period.

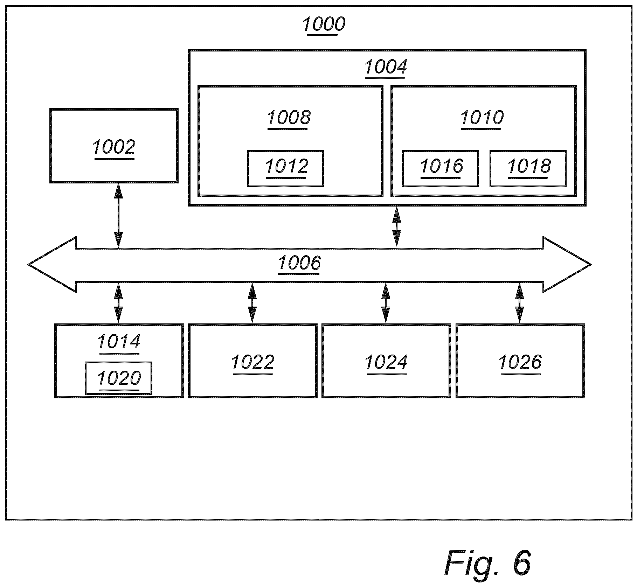

Fig. 6 is a schematic diagram of a computer system 1000 for implementing examples disclosed herein, such as for implementing examples of the computer system 31 according to examples. The computer system 1000 is adapted to execute instructions from a computer-readable medium to perform these and/or any of the functions or processing described herein. The computer system 1000 may be connected (e.g., networked) to other machines in a LAN, an intranet, an extranet, or the Internet, or by direct wired or wireless communication. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or indication processing or for executing computer code stored in memory 1004. The processing circuitry 1002 may, for example, include a general-purpose processor, an application specific processor, a Digital indication Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system comprising processing circuitry configured to: receive an indication of a predicted duration of a sailing period during which a vehicle can carry out a mission without driving at least a first wheel and a second wheel of the vehicle using a prime mover of the vehicle; and provide, in response to the predicted duration of the sailing period being longer than a predefined threshold duration, a command to disconnect, during at least a portion of the sailing period, the first wheel and the second wheel from each other, allowing the first wheel and the second wheel to rotate independently of each other.

Example 2: The computer system of example 1, wherein the processing circuitry is further configured to: receive an indication of an end of the sailing period; and provide, in response to the indication of the end of the sailing period, a command to reconnect the first wheel and the second wheel to each other, forcing the first wheel and the second wheel to rotate together.

Example 3: The computer system of example 1 or 2, wherein the first wheel is drivable by a first drive axle of the vehicle and the second wheel is drivable by a second drive axle of the vehicle.

Example 4: The computer system of any of examples 1-3, wherein the processing circuitry is further configured to: provide a command to disconnect a transmission of the vehicle from the prime mover of the vehicle during at least a portion of the sailing period.

Example 5: The computer system of any of examples 1-4, wherein the processing circuitry is further configured to: provide a command to deactivate the prime mover of the vehicle during at least a portion of the sailing period.

Example 6: The computer system of any of examples 1-4, wherein the processing circuitry is further configured to: estimate, while the first wheel and a second wheel are disconnected from each other during at least the portion of the sailing period, a difference between an angular speed of the first wheel and an angular speed of the second wheel.

Example 7: The computer system of example 6, wherein the processing circuitry is further configured to: provide, in response to the difference between the angular speed of the first wheel and the angular speed of the second wheel being estimated to be smaller than a predefined difference, a command to reconnect the first wheel and the second wheel to each other, forcing the first wheel and the second wheel to rotate together after the sailing period.

Example 8: The computer system of any of examples 1-7, wherein the processing circuitry is configured to: receive an indication of a predicted duration of a sailing period during which a vehicle can carry out a mission without driving at least a first wheel and a second wheel of the vehicle using a prime mover of the vehicle; provide a command to disconnect the prime mover of the vehicle from a transmission of the vehicle; provide a command to deactivate the prime mover of the vehicle; provide, conditional upon the predicted duration of the sailing period being longer than a predefined threshold duration, a command to disconnect, during at least a portion of the sailing period, the first wheel and the second wheel from each other, allowing the first wheel and the second wheel to rotate independently of each other; provide a command to reactivate the prime mover of the vehicle and reconnect the prime mover to the transmission of the vehicle; and provide, conditional upon the predicted duration of the sailing period being longer than the predefined threshold duration, a command to reconnect the first wheel and the second wheel to each other, forcing the first wheel and the second wheel to rotate together.

Example 9: A vehicle comprising the computer system of any of examples 1-8.

Example 10: The vehicle of example 9, comprising: a prime mover; a first wheel and a second wheel; and a coupling between the first wheel and the second wheel, the coupling being controllable by the processing circuitry of the computer system between an engaged state in which the first wheel and the second wheel are forced to rotate with a fixed angular speed difference and a disengaged state in which the first wheel and the second wheel are allowed to rotate independently of each other.

Example 11: A computer-implemented method, comprising: receiving an indication of a predicted duration of a sailing period during which a vehicle can carry out a mission without driving at least a first wheel and a second wheel of the vehicle using a prime mover of the vehicle; and providing, in response to the predicted duration of the sailing period being longer than a predefined threshold duration, a command to disconnect, during at least a portion of the sailing period, the first wheel and the second wheel from each other, allowing the first wheel and the second wheel to rotate independently of each other.

Example 12: The method of example 11, further comprising: receiving an indication of an end of the sailing period; and providing, in response to the indication of the end of the sailing period, a command to reconnect the first wheel and the second wheel to each other, forcing the first wheel and the second wheel to rotate together.

Example 13: The method of any of examples 11-12, wherein the first wheel is drivable by a first drive axle of the vehicle and the second wheel is drivable by a second drive axle of the vehicle.

Example 14: The method of any of examples 11-13, further comprising: providing a command to disconnect a transmission of the vehicle from the prime mover during at least a portion of the sailing period.

Example 15: The method of any of examples 11-13, further comprising: providing a command to deactivate the prime mover of the vehicle during at least a portion of the sailing period.

Example 16: The method of any of examples 11-13, further comprising: estimating, while the first wheel and the second wheel are disconnected from each other during at least a portion of the sailing period, a difference between an angular speed of the first wheel and an angular speed of the second wheel.

Example 17: The method of example 16, further comprising: providing, in response to the difference between the angular speed of the first wheel and the angular speed of the second wheel being estimated to be smaller than a predefined difference, a command to reconnect the first wheel and the second wheel to each other, forcing them to rotate together after the sailing period.

Example 18: The method of any of examples 11-17, comprising: receiving an indication of a predicted duration of a sailing period during which a vehicle can carry out a mission without driving at least a first wheel and a second wheel of the vehicle using a prime mover of the vehicle; providing a command to disconnect the prime mover of the vehicle from a transmission of the vehicle; providing a command to deactivate the prime mover of the vehicle; providing, conditional upon the predicted duration of the sailing period being longer than a predefined threshold duration, a command to disconnect, during at least a portion of the sailing period, the first wheel and the second wheel from each other, allowing them to rotate independently; providing a command to reactivate the prime mover of the vehicle and reconnect the prime mover to the transmission of the vehicle; and providing, conditional upon the predicted duration of the sailing period being longer than the predefined threshold duration, a command to reconnect the first wheel and the second wheel to each other, forcing them to rotate together.

Example 19: A computer program product comprising program code for performing, when executed by the processing circuitry comprised in the computer system of any of examples 1-8, the method of any of examples 11-18.

Example 20: A non-transitory computer-readable storage medium comprising instructions, which when executed by the processing circuitry comprised in the computer system of any of examples 1-8, cause the processing circuitry to perform the method of any of examples 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (31) comprising processing circuitry (33) configured to:
receive an indication (35) of a predicted duration of a sailing period during which a vehicle (1) can carry out a mission without driving at least a first wheel (13a-b) and a second wheel (17a-b) of the vehicle (3) using a prime mover (7) of the vehicle (3); and
provide, in response to the predicted duration of the sailing period being longer than a predefined threshold duration, a command (37) to disconnect, during at least a portion of the sailing period, the first wheel (13a-b) and the second wheel (17a-b) from each other, allowing the first wheel (13a-b) and the second wheel (17a-b) to rotate independently of each other.

2. The computer system (31) of claim 1, wherein the processing circuitry (33) is further configured to:
receive an indication of an end of the sailing period; and
provide, in response to the indication of the end of the sailing period, a command to reconnect the first wheel (13a-b) and the second wheel (17a-b) to each other, forcing the first wheel (13a-b) and the second wheel (17a-b) to rotate together.

3. The computer system (31) of claim 1 or 2, wherein the first wheel (13a-b) is drivable by a first drive axle (15) of the vehicle (3) and the second wheel is drivable by a second drive axle (19) of the vehicle (3).

4. The computer system (31) of any of claims 1-3, wherein the processing circuitry (33) is further configured to:
provide a command to disconnect a transmission (21) of the vehicle (3) from the prime mover (7) of the vehicle (3) during at least a portion of the sailing period.

5. The computer system (31) of any of claims 1-4, wherein the processing circuitry (33) is further configured to:
provide a command to deactivate the prime mover (7) of the vehicle (3) during at least a portion of the sailing period.

6. The computer system (31) of any of claims 1-4, wherein the processing circuitry (33) is further configured to:
estimate, while the first wheel (13a-b) and a second wheel (17a-b) are disconnected from each other during at least the portion of the sailing period, a difference (Δω) between an angular speed of the first wheel (13a-b) and an angular speed of the second wheel (17a-b).

7. The computer system (31) of claim 6, wherein the processing circuitry (33) is further configured to:
provide, in response to the difference (Δω) between the angular speed of the first wheel (13a-b) and the angular speed of the second wheel (17a-b) being estimated to be smaller than a predefined difference (TH), a command to reconnect the first wheel (13a-b) and the second wheel (17a-b) to each other, forcing the first wheel (13a-b) and the second wheel (17a-b) to rotate together after the sailing period.

8. The computer system (31) of any of claims 1-7, wherein the processing circuitry (33) is configured to:
receive an indication of a predicted duration of a sailing period during which a vehicle (3) can carry out a mission without driving at least a first wheel (13a-b) and a second wheel (17a-b) of the vehicle (3) using a prime mover (7) of the vehicle (3);
provide a command to disconnect the prime mover (7) of the vehicle (3) from a transmission (21) of the vehicle (3);
provide a command to deactivate the prime mover (7) of the vehicle (3);
provide, conditional upon the predicted duration of the sailing period being longer than a predefined threshold duration, a command to disconnect, during at least a portion of the sailing period, the first wheel (13a-b) and the second wheel (17a-b) from each other, allowing the first wheel (13a-b) and the second wheel (17a-b) to rotate independently of each other;
provide a command to reactivate the prime mover (7) of the vehicle (3) and reconnect the prime mover (7) to the transmission (21) of the vehicle (3); and
provide, conditional upon the predicted duration of the sailing period being longer than the predefined threshold duration, a command to reconnect the first wheel (13a-b) and the second wheel (17a-b) to each other, forcing the first wheel (13a-b) and the second wheel (17a-b) to rotate together.

9. A vehicle (3) comprising the computer system (31) of any of claims 1-8.

10. The vehicle (3) of claim 9, comprising:
a prime mover (7);
a first wheel (13a-b) and a second wheel (17a-b); and
a coupling (25; 27; 29) between the first wheel (13a-b) and the second wheel (17a-b), the coupling (25; 27; 29) being controllable by the processing circuitry (33) of the computer system (31) between an engaged state in which the first wheel (13a-b) and the second wheel (17a-b) are forced to rotate with a fixed angular speed difference and a disengaged state in which the first wheel (13a-b) and the second wheel (17a-b) are allowed to rotate independently of each other.

11. A computer-implemented method, comprising:
receiving (S41) an indication of a predicted duration of a sailing period during which a vehicle (3) can carry out a mission without driving at least a first wheel (13a-b) and a second wheel (17a-b) of the vehicle (3) using a prime mover (7) of the vehicle (3); and
providing (S42), in response to the predicted duration of the sailing period being longer than a predefined threshold duration, a command to disconnect, during at least a portion of the sailing period, the first wheel (13a-b) and the second wheel (17a-b) from each other, allowing the first wheel (13a-b) and the second wheel (17a-b) to rotate independently of each other.

12. The method of claim 11, further comprising:
receiving an indication of an end of the sailing period; and
providing (S43), in response to the indication of the end of the sailing period, a command to reconnect the first wheel (13a-b) and the second wheel (17a-b) to each other, forcing the first wheel (13a-b) and the second wheel (17a-b) to rotate together.

13. The method of any of claims 11-12, wherein the first wheel (13a-b) is drivable by a first drive axle (15) of the vehicle (3) and the second wheel (17a-b) is drivable by a second drive axle (19) of the vehicle (3).

14. The method of any of claims 11-13, comprising:
receiving (S41) an indication of a predicted duration of a sailing period during which a vehicle (3) can carry out a mission without driving at least a first wheel (13a-b) and a second wheel (17a-b) of the vehicle (3) using a prime mover (7) of the vehicle (3);
providing a command to disconnect the prime mover (7) of the vehicle (3) from a transmission (21) of the vehicle (3);
providing a command to deactivate the prime mover (7) of the vehicle (3);
providing (S42), conditional upon the predicted duration of the sailing period being longer than a predefined threshold duration, a command to disconnect, during at least a portion of the sailing period, the first wheel (13a-b) and the second wheel (17a-b) from each other, allowing them to rotate independently;
providing a command to reactivate the prime mover (7) of the vehicle (3) and reconnect the prime mover (7) to the transmission (21) of the vehicle (3); and
providing (S43), conditional upon the predicted duration of the sailing period being longer than the predefined threshold duration, a command to reconnect the first wheel (13a-b) and the second wheel (17a-b) to each other, forcing them to rotate together.

15. A computer program product comprising program code for performing, when executed by the processing circuitry (33) comprised in the computer system (31) of any of claims 1-8, the method of any of claims 11-13.
